# EUROPÄISCHE PATENTSCHRIFT

(11) **EP 3 703 501 B1**
(45) Veröffentlichungstag und Bekanntmachung des Hinweises auf die Patenterteilung: **16.04.2025**
(21) Anmeldenummer: 18795360.9
(22) Anmeldetag: 22.10.2018
(51) Int. Cl.: A21B 3/10, F24C 15/00, F24C 15/02

(54) **GARGERÄT MIT EINER BELEUCHTUNGSVORRICHTUNG ZUM ABSTRAHLEN VON LICHTSTRAHLEN**
COOKING APPLIANCE WITH A LIGHTING DEVICE FOR EMITTING RAYS OF LIGHT
APPAREIL DE CUISSON AVEC UN DISPOSITIF D'ÉCLAIRAGE POUR ÉMETTRE DES FAISCEAUX LUMINEUX

(30) Priorität: 02.11.2017 DE 102017219500
(43) Veröffentlichungstag der Anmeldung: 09.09.2020
(73) Patentinhaber: BSH Hausgeräte GmbH, 81739 München (DE)
(72) Erfinder: BALZER, Maxim, 83026 Rosenheim (DE); JELL, Peter, 83254 Breitbrunn (DE)
(86) Internationale Anmeldenummer: PCT/EP2018/078836
(87) Internationale Veröffentlichungsnummer: WO 2019/086282

(56) Entgegenhaltungen:
- EP-A1- 2 746 678
- EP-A1- 2 787 282
- DE-A1- 102007 058 942
- DE-B3- 102009 000 655
- DE-B4- 102013 208 374
- FR-A1- 2 936 859

## Beschreibung

Die Erfindung betrifft ein Gargerät mit einem Gehäuse, in dem ein Garraum ausgebildet ist. Das Gargerät weist darüber hinaus eine Tür auf, die bewegbar an dem Gehäuse angeordnet ist und zum Verschließen des Garraums ausgebildet ist. Das Gargerät weist darüber hinaus eine Beleuchtungsvorrichtung auf, die zumindest eine Lichtquelle aufweist. Die Beleuchtungsvorrichtung ist zumindest mit Teilkomponenten an dem Gehäuse angeordnet.

Bei Gargeräten wie beispielsweise einem Backofen oder einem Dampfgargerät oder einem Mikrowellengargerät, ist es bekannt, dass Beleuchtungsvorrichtungen vorhanden sind. Mit diesen kann beispielsweise der Garraum im Inneren ausgeleuchtet werden. Derartiges ist beispielsweise aus der WO 2011/117037 A1 bekannt. Dort sind Lichtquellen extern zur Tür angeordnet, wobei mittels zusätzlichen optischen Elementen, wie Reflektoren, das Licht dann in den Garraum geleitet werden kann. Darüber hinaus ist es dort auch möglich, dass ein im Vorfeld des Garraums befindlicher Raum durch die Lichtquellen der Beleuchtungsvorrichtung ausgeleuchtet werden kann, um beispielsweise einen ausgezogenen Gargutträger von oben beleuchten zu können.

Darüber hinaus ist es dort auch möglich, das Licht der türexternen Lichtquelle in eine den Garraum verschließende Tür einzuleiten.

Darüber hinaus ist aus der DE 10 2009 000 655 B3 ein Haushaltsgerät zum Zubereiten von Lebensmitteln bekannt. Dort ist vorgesehen, dass eine Beleuchtungsvorrichtung eine Lichtquelle aufweist, die im frontseitigen Bereich eines Gehäuses angeordnet ist und extern zu einer Tür angeordnet ist. Extern zur Tür ist darüber hinaus ein Lichtleiter angeordnet. In einer Ausführung ist vorgesehen, dass an der Tür ein weiterer Lichtleiter angeordnet ist, der im geschlossenen Zustand der Tür mit dem türexternen Lichtleichter koppelt, sodass das Licht von der Lichtquelle über die beiden Lichtleiter in die Tür eingeleitet werden kann. Der türseitige Lichtleiter ist relativ zur Tür bewegbar daran angeordnet.

Bei den bekannten Ausführungen können vielfältige Beleuchtungen im Garraum, vor dem Garraum und in der Tür stattfinden, dennoch ist die Funktionalität bezüglich einer individuellen optischen Beleuchtung spezifischer Bereiche begrenzt. Ferner offenbart die FR 2 936 859 A1 einen Backofen mit einer in einem Bedienfeld integrierten Beleuchtungsvorrichtung.

Es ist Aufgabe der vorliegenden Erfindung, ein Gargerät zu schaffen, bei welchem das Beleuchten spezifischer Teilbereiche mit der Beleuchtungsvorrichtung verbessert ist.

Diese Aufgabe wird durch ein Gargerät, welches die Merkmale nach Anspruch 1 aufweist, gelöst.

Ein Aspekt der Erfindung betrifft ein Gargerät mit einem Gehäuse, in dem ein Garraum ausgebildet ist. Das Gargerät weist darüber hinaus eine Tür auf, die bewegbar an dem Gehäuse angeordnet ist und zum Verschließen des Garraums ausgebildet ist. Das Gargerät weist darüber hinaus eine Beleuchtungsvorrichtung auf, die eine Lichtquelle aufweist. Die Beleuchtungsvorrichtung ist zumindest mit Teilkomponenten am dem Gehäuse angeordnet. Die Beleuchtungsvorrichtung weist einen ersten Betriebsmodus auf, in dem die Lichtstrahlen mit einem ersten Lichtstrom an einem Lichtaustrittsbereich aus dem Gehäuse in die geschlossene Tür abgestrahlt sind und weist einen zumindest zweiten Betriebsmodus auf, in dem die Lichtstrahlen mit einem vom ersten Lichtstrom unterschiedlichen zweiten Lichtstrom an den Lichtaustrittsbereich aus dem Gehäuse in einen bei geöffneter Tür vor dem Garraum gebildeten Vorraum abgestrahlt sind.

Dadurch kann ein umfängliches Ausleuchten insbesondere eines Vorraums vor einem Garraum erfolgen, sodass dann auch mit einer reduzierten Anzahl an Lichtquellen dennoch ein besonders helles und homogenes Ausleuchten eines großen Flächenbereichs und insbesondere dann auch eines größeren Volumenbereichs in diesem Vorraum erfolgen kann. Auch ein Gargutträger kann somit dann mit einer minimierten Anzahl an Lichtquellen in seinem herausgezogenen Zustand aus dem Garraum von oben ausreichend hell beleuchtet werden. Sehr inviduelle und den Situationen angepasste Helligkeiten können durch die definiert unterschiedlichen Lichströme dadurch auch erzeugt werden.

Insbesondere ist auch vorgesehen, dass in den unterschiedlichen Betriebszuständen die Lichtstrahlen mit individueller Lichtstärke erzeugbar sind. Die Eigenschaft der veränderlichen Lichtstärke an wenigstens einer Mündung ist diesbezüglich vorteilhaft.

Wie bereits erwähnt, ist in einer vorteilhaften Ausführung bei einem Zustand der Lichteinkopplung in die Tür der Lichtstrom unterschiedlich zu einem Zustand, wenn ein herausgezogener Gargutträger in Vorraum des Garraums von oben durch zumindest eine Lichtquelle beleuchtet werden soll.

Gerade dann, wenn in Verbindung mit einem bevorzugten Beispiel der individuellen Gestaltung und lokal definierten Erzeugung eines Brennpunkts der Lichtstrahlen außerhalb des Gehäuses dann auch nach dem Brennpunkt, insbesondere bei geöffneter Tür, eine definierten Aufweitung der Lichtstrahlen zu einem Lichtkegel folgen soll, kann durch diese Ausgestaltung der individuellen Lichtströme auch die Lichtstärke dann individuell angepasst werden, die den Quotienten aus dem Lichtstrom durch den Raumwinkel darstellt.

Vorzugsweise ist vorgesehen, dass die beiden unterschiedlichen Lichtströme in den zumindest zwei unterschiedlichen Betriebszuständen sich um zumindest den Wert von 50 Lumen unterscheiden.

Der Unterschied der Lichtströme in unterschiedlichen Betriebszuständen kann auch abhängig von der Anzahl der Lichtquellen der Beleuchtungsvorrichtung sein, die dann jeweils zur individuellen Ausleuchtung beispielsweise eines Vorraums vor dem Garraum eingesetzt werden. Entsprechendes kann auch abhängig davon erfolgen, wie viele Lichtquellen einer Beleuchtungsvorrichtung vorhanden sind und für ein Einkoppeln von Lichtstrahlen in die Tür bei geschlossener Tür Verwendung finden.

Die Beleuchtungsvorrichtung weist eine Optikeinrichtung auf, die zur definierten Beeinflussung der Lichtstrahlen der Lichtquelle derart ausgebildet ist, dass die Lichtstrahlen außerhalb des Gehäuses in einem Brennpunkt gebündelt sind. Durch eine derartige Ausgestaltung ist es dann ermöglicht, die aus dem Gehäuse austretenden Lichtstrahlen derart zu bündeln, dass sie für die weitere Verwendung, beispielsweise zum Einkoppeln in einen gehäuseexternen Einkoppelbereich vorbereitet sind. Dadurch ist es dann ermöglicht, beispielsweise diesen Einkoppelbereich relativ klein und kompakt zu gestalten und dennoch einen hohen Anteil der aus dem Gehäuse austretenden und definiert geleiteten Lichtstrahlen in den Einkoppelbereich einzukoppeln. Andererseits ist es durch diese Ausgestaltung dann auch möglich, bei einem nicht vorgesehenen Einkoppeln in einen gehäuseexternen Einkoppelbereich die Lichtstrahlen des Weiteren zu verteilen, sodass sie auch einen gehäuseexternen Bereich direkt besser beleuchten können. Da gemäß den Gesetzmäßigkeiten der Optik die Lichtstrahlen sich nach dem Brennpunkt aufweiten und einen spezifischen Lichtkegel bilden, kann durch diese definierte Wahl des externen Brennpunkts das nach dem Brennpunkt wieder erfolgende Auffächern der Lichtstrahlen zu einem aufgeweiteten Lichtkegel definiert erfolgen und somit in gewünschtem Abstand dann wiederrum eine großflächige Beleuchtung erfolgen.

Die Optikeinrichtung weist zumindest ein optisch wirkendes Fokussierelement, wie beispielsweise eine Sammellinse oder einen Parabolspiegel oder dergleichen, auf, welches im Gehäuse angeordnet ist. Die Wirkung dieses gehäuseseitigen optischen Fokussierelements ist dann derart, dass von der Lichtquelle abgestrahlte Lichtstrahlen mit diesem Fokussierelement derart gebündelt werden, dass in definierter Weise außerhalb des Gehäuses und somit beim Austritt der Lichtstrahlen aus dem Gehäuse ein definierter Brennpunkt entsteht.

In vorteilhafter Weise ist vorgesehen, dass dieser zumindest eine Fokus beziehungsweise dieser zumindest eine Brennpunkt in einem definierten Abstand zu einer Außenwand des Gehäuses ausgebildet ist beziehungsweise erzeugt ist. Die oben genannten Vorteile im Hinblick auf die funktionelle, individuelle weitere Verwendung der aus dem Gehäuse austretenden Lichtstrahlen ist daher in besonders vorteilhafter Weise ermöglicht.

Vorzugsweise beträgt der Abstand zwischen 0 cm und 5 cm, insbesondere zwischen 0 cm und 4 cm, insbesondere zwischen 0 cm und 3cm, insbesondere zwischen 0 cm und 2 cm, beispielsweise zwischen 0,5 cm und 1,5 cm. Der Brennpunkt ist dadurch relativ nah zum Gehäuse gelegt, sodass gerade das nach dem Brennpunkt erfolgende wiederrum gegebene Auffächern der Lichtstrahlen zu einem aufgeweiteten Lichtkegel dadurch vorteilhaft erfolgt, dass beispielsweise bei einem ausgezogenen Gargutträger, der sich somit in einem Vorraum zum Gargerät (in Tiefenrichtung des Gargeräts betrachtet) bildet, möglichst großflächig beleuchtet werden kann. Dadurch ist durch diese Ausgestaltung dann eine derartige Auffächerung ermöglicht, dass der Gargutträger von oben mit dieser einen Lichtquelle zumindest zu 50 Prozent seiner Oberfläche, vorzugsweise zu mindestens 70 Prozent seiner Oberfläche beleuchtet ist. Andererseits ist durch diesen definierten Abstand in besonders vorteilhafter Weise dann auch ermöglicht, ein möglichst umfängliches und flächenkompaktes Einkoppeln dieser aus dem Gehäuse austretenden Lichtstrahlen in eine Tür des Gargeräts zu ermöglichen, wenn die Tür geschlossen ist. Da die Tür dann üblicherweise an dem Gehäuse anliegt beziehungsweise der Einkoppelbereich des türseitigen optischen Elements insbesondere nah zu einer Außenwand des Gehäuses, aus dem die Lichtstrahlen der Lichtquelle austreten, angeordnet ist, ist eine derartige nahe Verlegung des Brennpunkts zur Außenwand der Gehäuses vorteilhaft, um dann die bestmögliche und umfängliche Einkopplung der Lichtstrahlen in die Tür zu ermöglichen.

Es ist vorgesehen, dass die Tür zumindest ein optisches Element der Beleuchtungsvorrichtung aufweist, in welches Lichtstrahlen der Lichtquelle im geschlossenen Zustand der Tür vorzugsweise einkoppelbar sind. Der Brennpunkt liegt im geschlossenen Zustand der Tür an einem Einkoppelende des optischen Elements oder innerhalb eines in Richtung der Lichtausbreitung betrachtet Distanzintervalls von vorzugsweise +/- 3 cm, insbesondere +/- 2 cm, insbesondere +/- 1 cm dazu. Die oben genannten Vorteile werden dadurch in besonderem Maße erreicht und das Einkoppeln der aus dem Gehäuse austretenden Lichtstrahlen in die Tür ist besonders präzise und umfänglich ermöglicht. Darüber hinaus ist ein besonders kompakter Aufbau ermöglicht. Dieses türseitige optische Element ist somit eine Teilkomponente der Beleuchtungsvorrichtung, die gehäuseextern und türintern angeordnet ist. Die Beleuchtungsvorrichtung ist somit bei dieser Ausführung in Teilkomponenten auch türintern angeordnet.

Vorzugsweise ist vorgesehen, dass dieses Einkoppelende eine Fläche aufweist, die größer ist, als die Fläche des Brennpunkts. Dies ist eine weitere sehr vorteilhafte Ausführung, da somit das im Brennpunkt gebündelte Licht beziehungsweise diese Lichtstrahlen besonders umfänglich in die Tür einkoppelbar sind.

Vorzugsweise weist die Beleuchtungsvorrichtung eine Lichtleitvorrichtung auf, die in der Tür angeordnet ist. Mit der Lichtleichtvorrichtung sind im geschlossenen Zustand der Tür von der Lichtquelle abgestrahlte Lichtstrahlen in Tiefenrichtung des Gargeräts betrachtet nach vorne aus der Tür und/oder nach hinten aus der Tür abstrahlbar. Durch eine derartige Ausgestaltung können im geschlossenen Zustand der Tür spezifische Bereiche vor der Tür und somit außerhalb des Gargeräts individuell erleuchtet werden. Darüber hinaus ist es dann auch möglich, in der Tür befindliche Komponenten zu beleuchten, die dann wiederrum bei externer Betrachtung der Tür als auch außenseitig beleuchtete Elemente wahrgenommen werden können. Darüber hinaus ist es auch möglich, dann im geschlossenen Zustand der Tür von der Tür Licht definiert in den Garraum abzustrahlen, sodass auch im geschlossenen Zustand der Tür eine Beleuchtung von Teilbereichen des Garraums mit von der Tür abgestrahltem Licht ermöglicht ist. Dadurch ist die Betrachtung von Teilbereichen des Garraums auch im geschlossenen Zustand der Tür verbessert. Vorzugsweise ist vorgesehen, dass die Beleuchtungsvorrichtung zum Beleuchten eines in Tiefenrichtung des Gargeräts vor einer Beschickungsöffnung des Garraums liegenden Vorraums ausgebildet ist, wenn die Tür geöffnet ist. Der Vorraum ist derart beabstandet zum Brennpunkt angeordnet, dass die Beleuchtung des Vorraums mit einem in Richtung der Ausbreitung der Lichtstrahlen nach dem Brennpunkt wieder aufgeweiteten Lichtkegel erfolgt. Damit kann eine möglichst großflächige und gleichmäßige beziehungsweise homogene Beleuchtung des Vorraums erfolgen. Gerade dann, wenn beispielsweise bei geöffneter Tür ein Gargutträger aus dem Garraum zumindest teilweise herausgezogen ist und sich in diesem Vorraum befindet, kann dieser Gargutträger von oben durch diesen aufgeweiteten Lichtkegel großflächig angestrahlt und beleuchtet werden, insbesondere auch sehr homogen ausgestrahlt werden.

Vorzugsweise ist vorgesehen, dass die Beleuchtungsvorrichtung einen ersten Betriebsmodus aufweist, in dem die Lichtstrahlen mit einem ersten Lichtstrom an einem Lichtaustrittsbereich aus dem Gehäuse abgestrahlt sind. Die Beleuchtungsvorrichtung weist zumindest einen zweiten Betriebsmodus auf, in dem die Lichtstrahlen in einem zu dem ersten Lichtstrom unterschiedlichen zweiten Lichtstrom an dem Lichtaustrittsbereich aus dem Gehäuse abgestrahlt sind. Dies ist eine weitere sehr vorteilhafte Ausführung denn somit kann bei unterschiedlichen Gegebenheiten ein unterschiedlicher Lichtstrom erzeugt werden. Abhängig von der Örtlichkeit des zu beleuchtenden Bereichs und/oder eines zu beleuchtenden Objekts im Gargerät und/oder außerhalb des Gargeräts kann somit eine bedarfsgerechtere Beleuchtung erfolgen, sodass einem Beobachter stets ein situationsangepasstes Beleuchten geboten wird. Die Wahrnehmbarkeit in den unterschiedlichen Bereichen und/oder den unterschiedlichen Elementen ist dann individuell verbessert gegeben. Bedarfsgerecht kann dann auch bei Bereichen, die teilweise verdeckt sind oder in Nischen sich befinden oder im hinteren Teil des Garraums sich befinden verbessert beleuchtet werden und somit auch mit individueller Helligkeit beleuchtet werden. Auch anderweitige Effekte, wie ein unerwünschtes Blenden oder ein zu starkes Beleuchten von Elementen und/oder Bereichen kann dadurch vermieden werden. Stets wird somit dann nicht nur ein verbessertes optisches Beleuchten im Hinblick auf die gewünschte und angepasste Helligkeit erreicht, sondern darüber hinaus auch ein Nutzerfreundliches Wahrnehmen dieser Beleuchtung ermöglicht.

Vorzugsweise ist vorgesehen, dass das Durchführen des ersten Betriebsmodus mit einer ersten Stellung der Tür gekoppelt ist und/oder das Durchführen des zweiten Betriebsmodus mit einer zweiten Stellung der Tür gekoppelt ist. Somit kann es beispielsweise vorgesehen sein, dass abhängig von der jeweiligen Stellung der Tür automatisch der individuelle Lichtstrom der Beleuchtungsvorrichtung eingestellt ist. Dies kann beispielsweise über eine Steuereinheit erfolgen. Es kann vorgesehen sein, dass die erste Stellung der Tür eine vollständig geschlossene Stellung ist und/oder die zweite Stellung der Tür eine derartige Stellung ist, bei welcher sich ein Vorraum vor einer Beschickungsöffnung des Garraums bildet, der nach unten durch die Tür begrenzt ist.

Es kann beispielsweise vorgesehen sein, dass im ersten Betriebsmodus der Lichtstrom höher ist als im zweiten Betriebsmodus. Gerade dann, wenn insbesondere in dem ersten Betriebsmodus die Tür vollständig geschlossen ist, kann dann ein höherer Lichtstrom erzeugt werden, um im Inneren des Garraums eine ausreichende Beleuchtung zu schaffen, sodass auch durch die geschlossene Tür hindurch der Garraum für einen Nutzer verbessert beobachtet werden kann. Zusätzlich oder statt dazu kann dann auch das Abstrahlen von der Tür geräteextern und somit insbesondere beispielsweise nach vorne hin mit einem höheren Lichtstrom erfolgen, sodass auch hier ein individuelles Beleuchten von Bereichen im Vorfeld auch bei geschlossener Tür verbessert ermöglicht ist. Auch können dann in dem Zusammenhang Komponenten in der Tür, die individuell beleuchtet werden sollen, mit einem diesbezüglich höheren Lichtstrom angeleuchtet werden, sodass die frontseitige Wahrnehmbarkeit eines Beobachters, der die Tür frontseitig einsieht, verbessert ermöglicht ist.

In einer vorteilhaften Ausführung kann die zumindest eine gehäuseseitige Lichtquelle der Beleuchtungsvorrichtung in Tiefenrichtung betrachtet im Bereich einer Bedienblende beziehungsweise einer Schalterfront oder eines Flansches, beispielsweise eines Flansches einer Muffel, die mit den Wänden der Garraum begrenzt, oder aber auch an einer vertikalen frontseitigen Leiste, die als Lisene ausgebildet ist, angeordnet sein.

Vorzugsweise ist bei dem Gargerät vorgesehen, dass wenigstens eine Lichtmündung bei geöffneter Tür als flächige Lichtquelle für die Beleuchtung des Vorraums dient und entsprechend ausgebildet ist, sodass hier ein entsprechend aufgeweiteter Lichtkegel wirkt. Im geschlossenen Zustand der Tür werden die Lichtstrahlen der Lichtquelle über diese Lichtmündung über einen weiteren Übergang zur Tür geleitet. Hier kann es dann vorgesehen sein, dass das gehäuseseitige optische Element der Beleuchtungsvorrichtung in vorteilhafter Weise derart gebildet ist, dass es eine Fokussierwirkung aufweist und diesbezüglich den gehäuseseitig externen Brennpunkt bildet. Das türseitige optische Element der Beleuchtungsvorrichtung kann ein Lichtleiter oder eine Lichtleiterverbindung sein. Es kann eine Lichtleitfaser oder mehrere Lichtleitfasern vorgesehen sein. Zusätzlich oder statt dazu kann auch zumindest eine Linse oder ein Reflektor oder ein Spiegel eingesetzt sein. Die genannten optischen Elemente können aus verschiedenen Materialien, beispielsweise aus Glas oder Silikon oder PMMA oder aus PC oder aus PS oder dergleichen ausgebildet sein.

Es kann vorgesehen sein, dass die Beleuchtungsvorrichtung türintern ein optisches Element aufweist, dessen Einkoppelbereich, in dem die Lichtstrahlen, die von dem Gehäuse abgestrahlt werden, eingekoppelt werden, als optisch wirkender Sammelbereich ausgebildet ist. Abhängig davon, wie die Lichtstrahlen auf diesen Einkoppelbereich des türseitigen optischen Elements eintreffen, kann dieser Sammelbereich als zumindest einseitig konvexe Linse oder zumindest einseitig konkave Linse ausgebildet sein.

Vorzugsweise weist die Beleuchtungsvorrichtung somit zumindest zwei separate optische Elemente auf, von denen ein optisches Element türextern und gehäuseintern angeordnet ist, und das zweite optische Element gehäuseextern und türintern angeordnet ist.

In einer vorteilhaften Ausführung sind diese zumindest zwei optischen Elemente jeweils als optische Fokussierelemente ausgebildet.

Es können hier beispielsweise zwei Linsen vorgesehen sein oder eine Linse und ein Lichtleiter, der als Faseroptik oder Lichtleiterstab ausgebildet ist, oder eine Linse und ein Spiegel oder eine Linse und ein Reflektor vorgesehen sein. Vorzugsweise ist die gehäuseseitige Ausgestaltung des optischen Elements derart, dass dieses optische Element einen Brennpunkt in einem Abstand zwischen 0,5 cm und 2 cm, insbesondere zwischen 0,5 cm und 1,5 cm, insbesondere 1 cm aufweist.

Es kann vorgesehen sein, dass das optische Element, welches gehäuseseitig angeordnet ist, zu der Außenwand, aus der das Licht aus dem Gehäuse austritt, nach innen zurück versetzt ist. Dadurch wird dieses optische Element entsprechend geschützt. Auch ist dadurch ein gewisser Schutz vor ungewollter Lichtstreuung im Gerät erreicht. Beispielsweise kann zwischen der Linse und der Außenwand ein Rohrstück angeordnet sein oder eine seitliche Blende ausgebildet sein. Diese Ausgestaltung mit einem Rohrstück oder einer Blende kann auch derart sein, dass das Rohrstück oder die Blende innenseitig mit einer beispielsweise mattierten, dunklen Oberfläche ausgebildet ist.

Das weitere optische Element, welches türseitig angeordnet ist, kann an dem Einkoppelbereich mit einer konkaven Oberfläche oder eben ausgebildet sein. Es kann vorgesehen sein, dass dieser Lichtsammelbereich des optischen Elementes, welches türseitig angeordnet ist, integriert und somit einstückig mit diesem optischen Element ausgebildet ist. Dadurch wird ein weiterer Medienübergang der Lichtstrahlen in der Tür zwischen separaten optischen Elementen vermieden.

Es kann auch hier vorgesehen sein, dass dieses optische Element, insbesondere der Einkoppelbereich, der vorzugsweise als Lichtsammelbereich ausgebildet ist, gegenüber einer Außenseite der Tür nach innen zurückversetzt angeordnet ist. Auch hier können dann die bereits oben genannten Vorteile, wie sie bei einer vesenkten beziehungsweise zurückversetzten Anordnung des optischen Elementes im Gehäuse erreicht wurden, ermöglicht werden. Es kann vorgesehen sein, dass dieses optische Element in einem oberen Bereich der Tür, beispielsweise in einer oberen Abdeckung, die auch als Topblende bezeichnet wird, angeordnet ist.

In einer weiteren vorteilhaften Ausführung ist vorgesehen, dass die Beleuchtungsvorrichtung zum Erzeugen von Lichtstrahlen in einer ersten Lichtfarbe ausgebildet ist und zumindest zum Erzeugen von Lichtstrahlen in einer zur ersten unterschiedlichen zweiten Lichtfarbe ausgebildet ist. Zusätzlich oder anstatt dazu kann vorgesehen sein, dass die Beleuchtungsvorrichtung zum Erzeugen eines Dauerlichts der Lichtstrahlen und/oder eines gepulsten Lichts der Lichtstrahlen ausgebildet ist. Insbesondere ist vorgesehen, dass durch die unterschiedlichen Lichtfarben unterschiedliche Betriebsfunktionen des Gargeräts optisch angezeigt sind und/oder unterschiedliche Werte von Betriebsparametern zumindest einer Betriebsfunktion des Gargeräts optisch angezeigt sind. Zusätzlich oder anstatt dazu kann vorgesehen sein, dass abhängig von einer Pulsfrequenz der Lichtstrahlen unterschiedliche Betriebsfunktionen und/oder unterschiedliche Werte von Betriebsparametern zumindest einer Betriebsfunktion des Gargeräts optisch angezeigt sind.

Vorzugsweise ist vorgesehen, dass die Lichtquelle eine Leuchtdiode ist. Sie kann auch eine Mehrfarben-Leuchtdiode sein. Vorzugsweise ist vorgesehen, dass die Beleuchtungsvorrichtung eine Lichtquelle aufweist, die Lichtstrahlen erzeugt, mit denen bei geöffneter Tür ein Vorraum in Tiefenrichtung vor dem Garraum ausleuchtbar ist und die auch Lichtstrahlen erzeugt, die bei geschlossener Tür von dem Gehäuse in die Tür eingestrahlt werden. Es werden dann mit einer einzigen Lichtquelle Lichtstrahlen für verschiedene Verwendungen beziehungsweise unterschiedliche spezifische Beleuchtungsszenarien generiert.

Vorzugsweise weist die Beleuchtungsvorrichtung zumindest zwei Lichtquellen auf, die jeweils zu dieser oben genannten Funktionalität ausgebildet sind. Vorzugsweise sind diese Lichtquellen in Höhenrichtung des Gargeräts betrachtet oberhalb der Beschickungsöffnung des Garraums angeordnet und insbesondere in Breitenrichtung betrachtet an gegenüberliegenden Seiten angeordnet.

Ein weiterer unabhängiger Aspekt der Erfindung betrifft ein Gargerät mit einem Gehäuse, in dem ein Garraum ausgebildet ist. Das Gargerät weist darüber hinaus eine Tür auf. Die Tür ist bewegbar an dem Gehäuse angeordnet. Sie ist darüber hinaus zum Verschließen des Garraums ausgebildet. Das Gargerät weist darüber hinaus eine Beleuchtungsvorrichtung auf, die zumindest eine Lichtquelle aufweist. Die Beleuchtungsvorrichtung ist zumindest mit Teilkomponenten an dem Gehäuse angeordnet und zumindest mit Teilkomponenten türextern angeordnet. Die Beleuchtungsvorrichtung weist eine Optikeinrichtung auf, die zur definierten Beeinflussung der Lichtstrahlen der Lichtquelle derart ausgebildet ist, dass die Lichtstrahlen außerhalb des Gehäuses in einem Brennpunkt gebündelt sind. Durch eine derartige Ausgestaltung ist es dann ermöglicht, die aus dem Gehäuse austretenden Lichtstrahlen derart zu bündeln, dass sie für die weitere Verwendung, beispielsweise zum Einkoppeln in einen gehäuseexternen Einkoppelbereich vorbereitet sind. Dadurch ist es dann ermöglicht, beispielsweise diesen Einkoppelbereich relativ klein und kompakt zu gestalten und dennoch einen hohen Anteil der aus dem Gehäuse austretenden und definiert geleiteten Lichtstrahlen in den Einkoppelbereich einzukoppeln. Andererseits ist es durch diese Ausgestaltung dann auch möglich, bei einem nicht vorgesehenen Einkoppeln in einen gehäuseexternen Einkoppelbereich die Lichtstrahlen des Weiteren zu verteilen, sodass sie auch einen gehäuseexternen Bereich direkt besser beleuchten können. Da gemäß den Gesetzmäßigkeiten der Optik die Lichtstrahlen sich nach dem Brennpunkt aufweiten und einen spezifischen Lichtkegel bilden, kann durch diese definierte Wahl des externen Brennpunkts das nach dem Brennpunkt wieder erfolgende Auffächern der Lichtstrahlen zu einem aufgeweiteten Lichtkegel definiert erfolgen und somit in gewünschtem Abstand dann wiederrum eine großflächige Beleuchtung erfolgen.

Ein weiterer unabhängiger Aspekt der Erfindung betrifft ein Gargerät mit einem Gehäuse, in dem ein Garraum ausgebildet ist. Das Gargerät weist darüber hinaus eine Tür auf, die bewegbar an dem Gehäuse angeordnet ist und welche zum Verschließen des Garraums ausgebildet ist. Das Gargerät weist darüber hinaus eine Beleuchtungsvorrichtung auf, die zumindest eine Lichtquelle aufweist. Die Beleuchtungsvorrichtung ist zumindest mit Teilkomponenten an dem Gehäuse angeordnet. Die Beleuchtungsvorrichtung weist eine Optikeinrichtung auf, welche ein erstes optisches Fokussierelement in dem Gehäuse aufweist, und welche ein dazu separates zweites optisches Fokussierelement aufweist, welches in der Tür angeordnet ist.

Ausführungen des oben genannten ersten unabhängigen Aspekts der Erfindung sind als vorteilhafte Ausführungen der weiteren unabhängigen Aspekte anzusehen.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen des Geräts gegebenen Positionen und Orientierungen angegeben.

Ausführungsbeispiele der Erfindung werden nachfolgend anhand schematischer Zeichnungen näher erläutert. Es zeigen:
- Fig. 1: eine schematische Frontansicht auf ein Ausführungsbeispiel eines erfindungsgemäßen Gargeräts;
- Fig. 2: eine perspektivische Darstellung des Gargeräts gemäß Fig. 1 mit geöffneter Tür;
- Fig. 3: eine Seitenansicht des Gargeräts gemäß Fig. 1;
- Fig. 4: eine Darstellung von Teilkomponenten einer Beleuchtungsvorrichtung des Gargeräts;
- Fig. 5: eine weitere schematische Darstellung von Teilkomponenten der Beleuchtungsvorrichtung;
- Fig. 6: eine vergrößerte Darstellung des Gargeräts gemäß Fig. 1 bis Fig. 3 in einem Teilausschnitt mit geschlossener Tür;
- Fig. 7: eine beispielhafte Darstellung eines Teilbereichs eines optischen Elements der Beleuchtungsvorrichtung, das türseitig angeordnet ist.

In den Figuren werden gleiche oder funktionsgleiche Elemente mit den gleichen Bezugszeichen versehen.

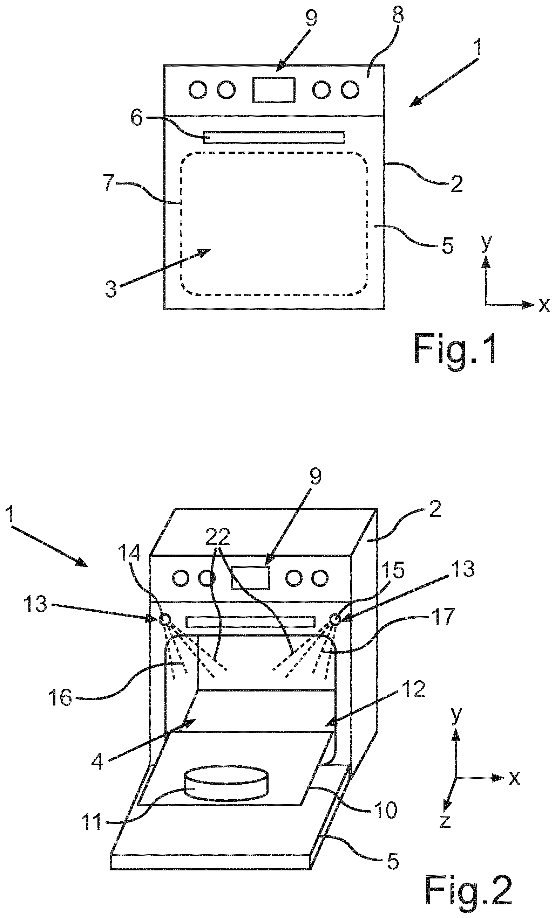

In Fig. 1 ist in einer Frontansicht ein Gargerät 1 gezeigt, welches beispielsweise ein Backofen oder ein Dampfgargerät oder ein Mikrowellengargerät sein kann. Das Gargerät 1 weist ein Gehäuse 2 auf, in dem ein Garraum 3 zum Zubereiten von Lebensmitteln ausgebildet ist. Der Garraum 3 ist durch Wände einer Muffel, die in dem Gehäuse 2 angeordnet ist, begrenzt. Frontseitig weist die Muffel und somit auch der Garraum 3 eine Beschickungsöffnung 4 (Fig. 2) auf, die durch eine Tür 5 verschließbar ist. Die Tür 5 ist hier schwenkbar an dem Gehäuse 2 angeordnet. die Tür 5 weist beispielhaft einen Griff 6 auf und ist zumindest bereichsweise mit einem transparenten Bereich 7 ausgebildet, durch welchen im geschlossenen Zustand der Tür 5 hindurchgeblickt und somit in den Garraum 3 eingesehen werden kann. Das Gargerät 1 weist darüber hinaus in Höhenrichtung (y-Richtung) betrachtet oberhalb der Tür 5 eine Bedienblende 8 auf, an der eine Bedienvorrichtung 9 angeordnet ist.

In Fig. 2 ist das Gargerät 1 in einer perspektivischen Darstellung und mit geöffneter Tür 5 gezeigt. Des Weiteren ist in Fig. 2 ein separater Gargutträger 10 gezeigt, welcher beispielsweise ein Backblech oder ein Gitterrost oder dergleichen sein kann. Auf dem Gargutträger 10 ist hier beispielhaft ein Gargut 11 aufgebracht. Der Gargutträger 10 ist hier in Tiefenrichtung (z-Richtung) aus dem Garraum 3 herausgezogen und befindet sich somit in Tiefenrichtung betrachtet in einem Vorraum 12 vor dem Garraum 3. Das Gargerät 1 weist darüber hinaus eine Beleuchtungsvorrichtung 13 auf. Im gezeigten Ausführungsbeispiel weist die Beleuchtungsvorrichtung 13 eine erste Lichtquelle 14 auf, die beispielsweise eine Lichtdiode, insbesondere eine Mehrfarben-Leuchtdiode sein kann. Beispielhaft ist hier vorgesehen, dass die erste Lichtquelle 14 in Höhenrichtung (y-Richtung) betrachtet oberhalb des Garraums 3 und benachbart zu der Beschickungsöffnung 4 angeordnet ist. Insbesondere ist vorgesehen, dass hier eine zweite Lichtquelle 15 der Beleuchtungsvorrichtung 13 vorgesehen ist. Die beiden Lichtquellen 14 und 15 sind in Breitenrichtung (x-Richtung), an gegenüberliegenden Seiten des Gehäuses 2 angeordnet beziehungsweise im Gehäuse 2 angeordnet. Sie können beispielsweise im Bereich der Bedienblende 8 oder an einer vertikalen jeweiligen Lisene, die ein frontseitiges Sichtbauteil darstellt, angeordnet sein. Auch können sie beispielsweise an einem Frontflansch, insbesondere der Muffel, angeordnet sein.

Diese Lichtquellen 14 und 15 sind somit türextern angeordnet und stellen Teilkomponenten der Beleuchtungsvorrichtung 13 dar, die in dem Gehäuse 2 angeordnet sind.

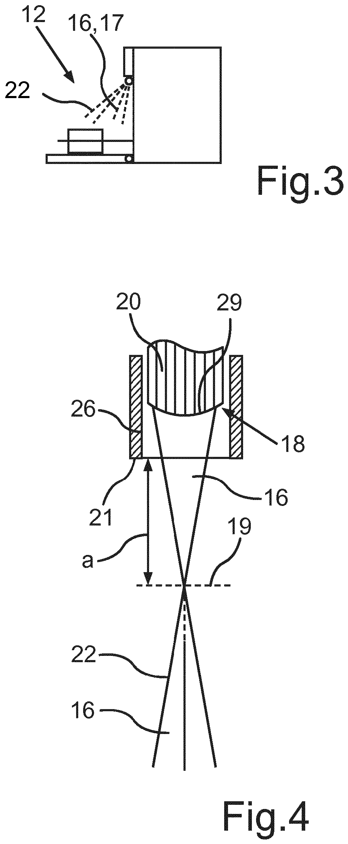

In Fig. 3 ist das Gargerät 1 gemäß Fig. 2 in einer Seitenansicht dargestellt. Der Vorraum 12 ist hier zu erkennen. Er wird hier durch die Beleuchtungsvorrichtung 13, insbesondere die Lichtstrahlen 16 und 17 der Lichtquellen 14 und 15 ausgeleuchtet. Die Lichtstrahlen 16, 17 bilden hier jeweils einen aufgeweiteten Lichtkegel 22, der schräg nach vorne und unten gerichtet ist und den Gargutträger 10 von oben beleuchtet.

Die Beleuchtungsvorrichtung 13 weist eine Optikeinrichtung 18 auf, wie dies in der beispielhaften Darstellung in Fig. 4 gezeigt ist. Die Optikeinrichtung 18 ist zur definierten Beeinflussung der Lichtstrahlen der Lichtquellen 14, 15 derart ausgebildet, dass diese Lichtstrahlen außerhalb des Gehäuses 2 in einem Brennpunkt 19 gebündelt sind. Der Brennpunkt 19 ist in einem definierten Abstand zu einem optischen Element 20 der Optikeinrichtung 18 und somit insbesondere auch in einem definierten Abstand zu einer Außenwand 21 des Gehäuses 2 ausgebildet. Vorzugsweise beträgt ein Abstand A zwischen 0 cm und 2 cm.

Wie bereits in Fig. 4 zu erkennen ist, werden die Lichtstrahlen 16, welche beispielhaft hier gezeigt sind, in dem Brennpunkt 19 gebündelt und weiten sich dann nach dem Brennpunkt 19, in Richtung der Lichtausbreitung betrachtet, wieder auf und formen den diesbezüglich bereits genannten Lichtkegel 22, wie er auch in Fig. 2 und Fig. 3 zu erkennen ist, nur wenn die Tür 5 geöffnet ist.

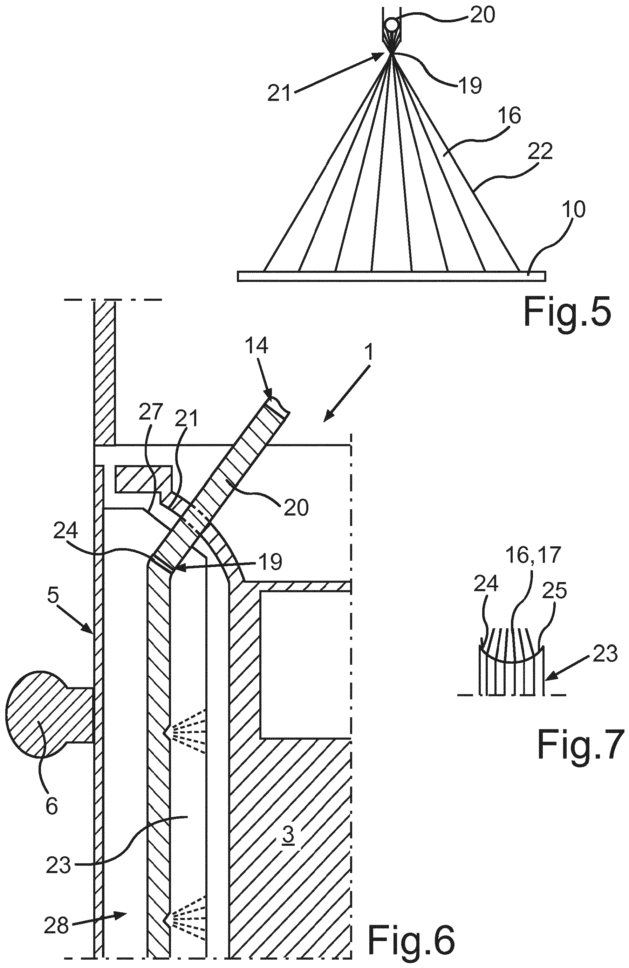

In Fig. 5 ist in einer schematischen Darstellung eine vergrößerte Ansicht dieses Lichtkegels 22 zu erkennen.

In vorteilhafter Weise ist somit vorgesehen, dass die Optikeinrichtung 18 ein türexternes und hier gehäuseinternes optisches Element 20 aufweist, welches ein erstes Fokussierelement ist.

Insbesondere ist vorgesehen, dass die Beleuchtungsvorrichtung 13 ein gehäuseexternes und türinternes weiteres optisches Element 23 aufweist, wie es beispielhaft in Fig. 7 gezeigt ist. Dieses weitere optische Element 23 kann in einer vorteilhaften Ausführung ebenfalls als zumindest bereichsweises Fokussierelement ausgebildet sein. Dies ist in der gezeigten Ausführung dadurch gegeben, dass ein Einkoppelbereich 24 dieses optischen Elements 23 eine konkave Oberfläche 25 aufweist. Aufgrund der Orientierung der in den Einkoppelbereich 24 einfallenden Lichtstrahlen 16 oder 17 wirkt diese konkave Oberfläche 25 hier sammelnd beziehungsweise bündelnd. Bei einer anderen Ausgestaltung und Orientierung der Lichtstahlen 16, 17, wie sie auf den Lichteinkoppelbereich 24 auftreffen, kann diese Oberfläche auch anderweitig gestaltet sein, beispielsweise eben ausgebildet sein. Insbesondere weist dieses optische Element 23, welches in der Tür 5 angeordnet ist, somit insbesondere einen Fokussierbereich beziehungsweise Lichtsammelbereich auf, der auch integriert und somit einstückig mit dem optischen Element 23 ausgebildet sein kann.

Dieser Lichteinkoppelbereich 24, der ein Einkoppelende des optischen Elements 23 darstellt, kann im geschlossenen Zustand der Tür 5 das aus dem Gehäuse 2 von den Lichtquellen 14 und 15 abgestrahlte Licht eingekoppelt werden.

Vorzugsweise ist vorgesehen, dass dieses optische Element 23 derartig in der Tür 5 angeordnet ist, dass der Einkoppelbereich 24 im geschlossenen Zustand der Tür 5 am Brennpunkt 19 oder innerhalb eines Distanzintervalls von +/- 1,0 cm an diesen Brennpunkt 19 angeordnet ist.

Diesbezüglich ist auf Fig. 6 hingewiesen, in der ein Teilbereich einer Vertikalschnittdarstellung durch das Gargerät 1 in geschlossenem Zustand der Tür 5 gezeigt ist. Wie hier zu erkennen ist, ist das hier lediglich symbolhaft gezeigte optische Element 20 der Optikeinrichtung 18 unmittelbar benachbart zu dem Einkoppelbereich 24 zugewandt. Dieses optische Element 20 kann, wie es in Fig. 4 gezeigt ist, gegenüber der Außenwand 21 innenliegend zurückversetzt angeordnet sein. Diesbezüglich kann gemäß der Darstellung in Fig. 4 dann ein Blendenbereich beziehungsweise ein Rohrstück 26 vorgesehen sein. Dieses kann an der Innenseite in einer vorteilhaften Ausführung matt ausgebildet sein. In einer anderen Ausführung kann vorgesehen sein, dass dieses optische Element 20, wie dies in Fig. 6 symbolhaft dargestellt ist, bis zu der Außenwand 21 sich erstreckt oder sogar darüber hinaus stehend angeordnet ist.

Bei allen Ausführungen ist in vorteilhafter Weise vorgesehen, dass dieser Einkoppelbereich 24 der gegenüber einer Außenseite 27, wie sie in Fig. 6 gezeigt ist, der Tür 5 nach innen zurückversetzt ist, am Brennpunkt 19 oder innerhalb des bereits genannten Distanzintervalls von +/- 1,0 cm liegt.

Vorzugsweise ist vorgesehen, dass die Beleuchtungsvorrichtung 13 im geschlossenen Zustand der Tür 5 das über die Optikeinrichtung 18 in das optische Element 23 eingekoppelte Licht beziehungsweise Lichtstrahlen 16, 17 aus der Tür 5 heraus in den Garraum 3 abstrahlt, wie dies in Fig. 6 angedeutet ist, und/oder in Tiefenrichtung betrachtet den Garraum 3 abgewandt nach vorne aus der Tür 5 abstrahlt, wie dies ebenfalls in Fig. 6 angedeutet ist.

Dazu weist die Beleuchtungsvorrichtung 13 eine Lichtleitvorrichtung 29 in der Tür 5 auf, die diese Abstrahlmöglichkeiten bei geschlossener Tür 5 bietet.

Erfindungsgemäß ist vorgesehen, dass die Beleuchtungsvorrichtung 13 einen ersten Betriebsmodus aufweist, in dem die Lichtstrahlen 16, 17, wie sie von den Lichtquellen 14, 15 abgestrahlt werden, mit einem ersten Lichtstrom an einem ersten Lichtaustrittsbereich aus dem Gehäuse 2 abgestrahlt sind, und die Beleuchtungsvorrichtung 13 zumindest einen zweiten Betriebsmodus aufweist, in dem diese Lichtstrahlen 16, 17 mit einem zum ersten Lichtstrom unterschiedlichen zweiten Lichtstrom an dem Lichtaustrittsbereich aus dem Gehäuse 2 abgestrahlt sind. Dieser Lichtaustrittsbereich kann beispielsweise die Austrittsöffnung an der Außenwand 21 sein oder der Lichtauskoppelbereich 29 (Fig. 4) des optischen Elements 20 sein, welches in Richtung der Lichtausbreitung bei gegebenenfalls mehreren vorhandenen optischen Elementen im Gehäuse 2 das letzte optische Element vor der Außenwand 21 ist.

Vorzugsweise ist das Durchführen des ersten Betriebsmodus mit einer ersten Stellung der Tür 5 gekoppelt und/oder das Durchführen des zweiten Betriebsmodus mit einer zweiten Stellung der Tür gekoppelt. Die erste Stellung der Tür 5 kann vorzugsweise die vollständig geschlossene Stellung sein, wie sie in Fig. 6 und Fig. 1 gezeigt ist. Die zweite Stellung der Tür 5 ist eine derartige, bei welcher sich ein Vorraum 12 vor der Beschickungsöffnung 4 des Garraums 3 bildet, wobei dieser Vorraum 12 durch die zumindest teilweise geöffnete Tür 3 nach unten hin begrenzt ist. Es kann auch vorgesehen sein, dass die Beleuchtungsvorrichtung 13 zum Erzeugen von Lichtstrahlen 16, 17 in einer ersten Lichtfarbe ausgebildet ist und zumindest zum Erzeugen von Lichtstrahlen 16, 17 in einer zur ersten unterschiedlichen zweiten Lichtfarbe ausgebildet ist. Es kann zusätzlich oder statt dazu auch vorgesehen sein, dass die Beleuchtungsvorrichtung 13 zum Erzeugen eines Dauerlichts der Lichtstrahlen 16, 17 und/oder eines gepulsten Lichts der Lichtstrahlen 16, 17 ausgebildet ist. Auch hier kann dann eine individuelle Zuordnung zu verschiedenen Betriebszuständen erfolgen, sodass beispielsweise in einem Betriebszustand die Lichtstrahlen 16, 17 in einem Dauerlicht erzeugt werden, und in einem zweiten Betriebszustand ein gepulstes Licht der Lichtstrahlen erzeugt ist. Es kann in dem Zusammenhang vorgesehen sein, dass abhängig von der Pulsfrequenz und/oder der Lichtfarbe eine spezifische Betriebsfunktion des Gargeräts 1 optisch angezeigt ist und/oder ein spezifischer Wert eines Betriebsparameters zumindest einer Betriebsfunktion optisch angezeigt ist.

### Bezugszeichenliste

- 1: Gargerät
- 2: Gehäuse
- 3: Garraum
- 4: Beschickungsöffnung
- 5: Tür
- 6: Griff
- 7: transparenter Bereich
- 8: Bedienblende
- 9: Bedienvorrichtung
- 10: Gargutträger
- 11: Gargut
- 12: Vorraum
- 13: Beleuchtungsvorrichtung
- 14: Lichtquelle
- 15: Lichtquelle
- 16: Lichtstrahlen
- 17: Lichtstrahlen
- 18: Optikeinrichtung
- 19: Brennpunkt
- 20: optisches Element
- 21: Außenwand
- 22: Lichtkegel
- 23: optisches Element
- 24: Einkoppelende
- 25: Fläche
- 26: Rohrstück
- 27: Außenseite
- 28: Lichtleitvorrichtung
- 29: Lichtauskoppelbereich

## Patentansprüche

1. Gargerät (1), mit einem Gehäuse (2), in dem ein Garraum (3) ausgebildet ist, und mit einer Tür (5), die bewegbar an dem Gehäuse (2) angeordnet ist und zum Verschließen des Garraums (3) ausgebildet ist, und mit einer Beleuchtungsvorrichtung (13), die eine Lichtquelle (14, 15) aufweist, wobei die Beleuchtungsvorrichtung (13) an dem Gehäuse (2) angeordnet ist, wobei die Beleuchtungsvorrichtung (13) einen ersten Betriebsmodus aufweist, in dem die Lichtstrahlen (16, 17) mit einem ersten Lichtstrom an einem Lichtaustrittsbereich (21, 29) aus dem Gehäuse (2) in die geschlossene Tür (5) abgestrahlt sind, und einen zumindest zweiten Betriebsmodus aufweist, in dem die Lichtstrahlen (16, 17) mit einem zum ersten Lichtstrom unterschiedlichen zweiten Lichtstrom an dem Lichtaustrittsbereich (21, 29) aus dem Gehäuse (2) in einen bei geöffneter Tür (5) vor dem Garraum (3) gebildeten Vorraum (12) abgestrahlt sind, wobei die Tür (5) zumindest ein optisches Element (23) der Beleuchtungsvorrichtung (13) aufweist, in welches Lichtstrahlen (16, 17) der Lichtquelle (14, 15) im geschlossenen Zustand der Tür (5) einkoppelbar sind, wobei die Beleuchtungsvorrichtung (13) eine Optikeinrichtung (18) aufweist, die zur definierten Beeinflussung der Lichtstrahlen (16, 17) der Lichtquelle (14, 15) derart ausgebildet ist, dass die Lichtstrahlen (16, 17) außerhalb des Gehäuses (2) in einem Brennpunkt (19) gebündelt sind, wobei der Brennpunkt (19) im geschlossenen Zustand der Tür (5) an einem Einkoppelende (24) des optischen Elements (23) oder innerhalb eines Distanzintervalls von +/- 3,0 cm dazu liegt.

2. Gargerät (1) nach Anspruch 1, **dadurch gekennzeichnet, dass** die erste Stellung der Tür (5) eine vollständig geschlossene Stellung ist und/oder die zweite Stellung der Tür (5) ist, bei welcher sich ein Vorraum (12) vor einer Beschickungsöffnung (4) des Garraums (3) bildet, der nach unten durch die Tür (5) begrenzt ist.

3. Gargerät (1) nach einem der vorhergehenden Ansprüche, **dadurch gekennzeichnet, dass** der Brennpunkt (19) in einem definierten Abstand (a) zu einer Außenwand (21) des Gehäuse (2) ausgebildet ist.

4. Gargerät (1) nach Anspruch 3, **dadurch gekennzeichnet, dass** der Abstand (a) zwischen 0 cm und 5 cm beträgt.

5. Gargerät (1) nach einem der vorhergehenden Ansprüche, **dadurch gekennzeichnet, dass** das Einkoppelende (24) eine Fläche (25) aufweist, die größer ist, als die Fläche des Brennpunkts (19).

6. Gargerät (1) nach einem der vorhergehenden Ansprüche, **dadurch gekennzeichnet, dass** die Beleuchtungsvorrichtung (13) zum Beleuchten eines in Tiefenrichtung (z) des Gargeräts (1) vor einer Beschickungsöffnung (4) des Garraums (3) liegenden Vorraum (12) ausgebildet ist, wenn die Tür (5) geöffnet ist, wobei der Vorraum (12) derart beabstandet zum Brennpunkt (19) ist, dass die Beleuchtung des Vorraums (12) mit einem in Richtung der Ausbreitung der Lichtstrahlen (16, 17) nach dem Brennpunkt (19) wieder aufgeweiteten Lichtkegel (22) erfolgt.

7. Gargerät (1) nach einem der vorhergehenden Ansprüche, **dadurch gekennzeichnet, dass** die Tür (5) eine Lichtleitvorrichtung (28) der Beleuchtungsvorrichtung (22) aufweist, mit welcher im geschlossenen Zustand der Tür (5) von der Lichtquelle (14, 15) abgestrahlte Lichtstrahlen (16, 17) in Tiefenrichtung (z) des Gargeräts (1) nach vorne aus der Tür (5) und/oder nach hinten aus der Tür (5) abstrahlbar sind.

8. Gargerät (1) nach einem der vorhergehenden Ansprüche, **dadurch gekennzeichnet, dass** die Beleuchtungsvorrichtung (13) zum Erzeugen von Lichtstrahlen (16, 17) in einer ersten Lichtfarbe ausgebildet ist und zumindest zum Erzeugen von Lichtstrahlen (16, 17) in zur ersten unterschiedlichen zweiten Lichtfarbe ausgebildet ist und/oder zum Erzeugen eines Dauerlichts der Lichtstrahlen (16, 17) und/oder eines gepulsten Lichts der Lichtstrahlen (16, 17) ausgebildet ist.

9. Gargerät (1) nach Anspruch 8, **dadurch gekennzeichnet, dass** durch die unterschiedlichen Lichtfarben unterschiedliche Betriebsfunktionen des Gargeräts (1) optisch angezeigt sind und/oder unterschiedliche Werte von Betriebsparametern zumindest einer Betriebsfunktion des Gargeräts (1) optisch angezeigt sind und/oder abhängig von einer Pulsfrequenz der Lichtstrahlen (16, 17) unterschiedliche Betriebsfunktionen und/oder unterschiedliche Werte von Betriebsparametern zumindest einer Betriebsfunktion des Gargeräts (1) optisch angezeigt sind.

10. Gargerät (1) nach einem der vorhergehenden Ansprüche, **dadurch gekennzeichnet, dass** die Lichtquelle (14, 15) eine Leuchtdiode ist, insbesondere eine Mehrfarben-Leuchtdiode ist.

## Claims

1. Cooking appliance (1), with a housing (2), in which a cooking compartment (3) is embodied, and with a door (5), which is movably arranged on the housing (2) and is embodied to close off the cooking compartment (3), and with a lighting apparatus (13), which has a light source (14, 15), wherein the lighting apparatus (13) is arranged on the housing (2), wherein the lighting apparatus (13) has a first operating mode, in which, with a first lighting current, the rays of light (16, 17) are emitted out of the housing (2) at a light outlet region (21, 29) into the closed door (5), and has an at least second operating mode, in which, with a second lighting current which is different from the first lighting current, the rays of light (16, 17) are emitted out of the housing (2) at the light outlet region (21, 29) into a front space (12) formed at the front of the cooking compartment (3) when the door (5) is opened, wherein the door (5) has at least one optical element (23) of the lighting apparatus (13), in which rays of light (16, 17) of the light source (14, 15) can be coupled when the door (5) is in the closed state, wherein the lighting apparatus (13) has an optical facility (18), which is embodied to influence the rays of light (16, 17) of the light source (14, 15) in a defined manner, such that the rays of light (16, 17) are directed outside the housing (2) into a focal point (19), wherein the focal point (19) lies at a coupling end (24) of the optical element (23) or lies inside a distance interval of +/- 3.0 cm thereto when the door (5) is in the closed state.

2. Cooking appliance (1) according to claim 1, **characterised in that** the first setting of the door (5) is a completely closed setting and/or is the second setting of the door (5), in which a front space (12) is formed in front of a loading opening (4) of the cooking compartment (3) which is delimited downwardly by way of the door (5).

3. Cooking appliance (1) according to one of the preceding claims, **characterised in that** the focal point (19) is embodied at a defined distance (a) from an outer wall (21) of the housing (2).

4. Cooking appliance (1) according to claim 3, **characterised in that** the distance (a) is between 0 cm and 5 cm.

5. Cooking appliance (1) according to one of the preceding claims, **characterised in that** the coupling end (24) has an area (25) which is larger than the area of the focal point (19).

6. Cooking appliance (1) according to one of the preceding claims, **characterised in that** the lighting apparatus (13) is embodied to illuminate, when the door (5) is opened, a front space (12) situated in front of a loading opening (4) of the cooking compartment (3) in the depth direction (z) of the cooking appliance (1), wherein the front space (12) is arranged at a distance from the focal point (19) such that the illumination of the front space (12) takes place with a light cone (22) which enlarges again after the focal point (19) in the direction of the dispersal of the rays of light (16, 17).

7. Cooking appliance (1) according to one of the preceding claims, **characterised in that** the door (5) has a has a light-guiding apparatus (28) of the lighting apparatus (22), with which rays of light (16, 17) emitted from the light source (14, 15) when the door (5) is in the closed state can be emitted in the depth direction (z) of the cooking appliance (1) to the front out of the door (5) and/or to the rear out of the door (5).

8. Cooking appliance (1) according to one of the preceding claims, **characterised in that** the lighting apparatus (13) is embodied to generate rays of light (16, 17) in a first colour of light and at least to generate rays of light (16, 17) in a second colour of light which is different from the first colour of light and/or is embodied to generate a constant light of the rays of light (16, 17) and/or a pulsed light of the rays of light (16, 17).

9. Cooking appliance (1) according to claim 8, **characterised in that** different operating functions of the cooking appliance (1) are optically displayed by way of the different colours of light and/or different values of operating parameters of at least one operating function of the cooking appliance (1) are optically displayed and/or different operating functions and/or different values of operating parameters of at least one operating function of the cooking appliance (1) are optically displayed depending on a pulse frequency of the rays of light (16, 17).

10. Cooking appliance (1) according to one of the preceding claims, **characterised in that** the light source (14, 15) is a light-emitting diode, in particular a multicolour light-emitting diode.

## Revendications

1. Appareil de cuisson (1), comprenant un boîtier (2), dans lequel un espace de cuisson (3) est formé, une porte (5), qui est montée mobile sur le boîtier (2), et est conçue pour refermer l'espace de cuisson (3), et un dispositif d'éclairage (13), qui comprend une source de lumière (14, 15),
dans lequel le dispositif d'éclairage (13) est disposé sur le boîtier (2),
dans lequel le dispositif d'éclairage (13) comprend un premier mode de fonctionnement, dans lequel les rayons lumineux (16, 17) sont émis avec un premier flux lumineux au niveau d'une région de sortie de lumière (21, 29) à partir du boîtier (2) dans la porte fermée (5), et comprend au moins un deuxième mode de fonctionnement, dans lequel les rayons lumineux (16, 17) sont émis avec un deuxième flux lumineux différent du premier flux lumineux au niveau de la région de sortie de lumière (21, 29) à partir du boîtier (2) dans un espace avant (12) formé devant l'espace de cuisson (3) lorsque la porte (5) est ouverte,
dans lequel la porte (5) comprend au moins un élément optique (23) du dispositif d'éclairage (13), dans lequel des rayons lumineux (16, 17) de la source de lumière (14, 15) peuvent être injectés à l'état fermé de la porte (5),
dans lequel le dispositif d'éclairage (13) comprend un dispositif optique (18), qui est configuré pour diriger de façon définie les rayons lumineux (16, 17) de la source de lumière (14, 15) de manière à ce que les rayons lumineux (16, 17) soient concentrés en dehors du boîtier (2) dans un point focal (19),
dans lequel le point focal (19) est situé, à l'état fermé de la porte (5), au niveau d'une extrémité d'injection (24) de l'élément optique (23) ou à une distance maximale de +/-3,0 cm de celle-ci.

2. Appareil de cuisson (1) selon la revendication 1, **caractérisé en ce que** la première position de la porte (5) est une position entièrement fermée et/ou la deuxième position de la porte (5) est une position dans laquelle un espace avant (12) se forme devant une ouverture d'introduction (4) de l'espace de cuisson (3), qui est délimité vers le bas par la porte (5).

3. Appareil de cuisson (1) selon l'une des revendications précédentes, **caractérisé en ce que** le point focal (19) est formé à une distance définie (a) d'une paroi extérieure (21) du boîtier (2).

4. Appareil de cuisson (1) selon la revendication 3, **caractérisé en ce que** la distance (a) est de 0 cm à 5 cm.

5. Appareil de cuisson (1) selon l'une des revendications précédentes, **caractérisé en ce que** l'extrémité d'injection (24) comprend une surface (25) qui est plus grande que la surface du point focal (19).

6. Appareil de cuisson (1) selon l'une des revendications précédentes, **caractérisé en ce que** le dispositif d'éclairage (13) est configuré pour éclairer un espace avant (12) situé devant une ouverture d'introduction (4) de l'espace de cuisson (3) dans le sens de la profondeur (z) de l'appareil de cuisson (1), lorsque la porte (3) est ouverte,
dans lequel l'espace avant (12) est distant du point focal (19) de telle manière que l'éclairage de l'espace avant (12) est effectué avec un cône lumineux (22) à nouveau élargi après le point focal (19) dans la direction de diffusion des rayons lumineux (16, 17).

7. Appareil de cuisson (1) selon l'une des revendications précédentes, **caractérisé en ce que** la porte (5) comprend un dispositif de guidage de lumière (28) du dispositif d'éclairage (22), avec lequel, à l'état fermé de la porte (5), des rayons lumineux (16, 17) émis par la source de lumière (14, 15) peuvent être émis dans la direction de profondeur (z) de l'appareil de cuisson (1) vers l'avant de la porte (5) et/ou vers l'arrière de la porte (5).

8. Appareil de cuisson (1) selon l'une des revendications précédentes, **caractérisé en ce que** le dispositif d'éclairage (13) est configuré pour produire des rayons lumineux (16, 17) dans une première couleur de lumière et est configuré au moins pour produire des rayons lumineux (16, 17) dans une deuxième couleur de lumière différente de la première couleur de lumière et/ou est configuré pour produire une lumière continue des rayons lumineux (16, 17) et/ou une lumière pulsée des rayons lumineux (16, 17).

9. Appareil de cuisson (1) selon la revendication 8, **caractérisé en ce que** des fonctions opérationnelles différentes de l'appareil de cuisson (1) sont affichées optiquement par les couleurs de lumière différentes et/ou des valeurs différentes de paramètres de fonctionnement d'au moins une fonction opérationnelle de l'appareil de cuisson (1) sont affichées optiquement par des couleurs de lumière différentes, et/ou des fonctions opérationnelles différentes et/ou des valeurs différentes de paramètres de fonctionnement d'au moins une fonction opérationnelle de l'appareil de cuisson (1) sont affichées optiquement en fonction d'une fréquence de pulsation des rayons lumineux (16, 17).

10. Appareil de cuisson (1) selon l'une des revendications précédentes, **caractérisé en ce que** la source de lumière (14, 15) est une diode électroluminescente, en particulier une diode électroluminescente à plusieurs couleurs.
